# EUROPÄISCHE PATENTSCHRIFT

(11) **EP 1 009 645 B1**
(45) Veröffentlichungstag und Bekanntmachung des Hinweises auf die Patenterteilung: **20.03.2002**
(21) Anmeldenummer: 98946447.4
(22) Anmeldetag: 02.09.1998
(51) Int. Cl.: B60K 15/04

(54) **KRAFTSTOFFBEHÄLTERSYSTEM, INSBESONDERE FÜR KRAFTFAHRZEUGE, UND VERFAHREN ZU SEINER STEUERUNG UND ÜBERWACHUNG**
FUEL TANK SYSTEM, ESPECIALLY FOR MOTOR VEHICLES, AND METHOD FOR CONTROLLING AND MONITORING SAID SYSTEM
SYSTEME DE RESERVOIR DE CARBURANT, NOTAMMENT POUR VEHICULES A MOTEUR, ET PROCEDE POUR REGULER ET CONTROLER LEDIT SYSTEME

(30) Priorität: 02.09.1997 DE 19738198
(43) Veröffentlichungstag der Anmeldung: 21.06.2000
(73) Patentinhaber: DaimlerChrysler AG, 70546 Stuttgart (DE)
(72) Erfinder: HEIMBRODT, Klaus-J., D-74369 Löchgau (DE); AUERNHAMMER, Helmut, D-91798 Höttingen (DE); THEUER, Thomas, D-91757 Treuchtlingen (DE); CONRAD, Thomas, D-91757 Treuchtlingen (DE); DUERMEIER, Ewald, D-71696 Moeglingen (DE); EDIGER, Bertold, D-71522 Backnang (DE); MAUZ, Lothar, D-73730 Esslingen (DE); SCHEURENBRAND, Dieter, D-72649 Wolfschlugen (DE); STOTZ, Manfred, D-73773 Aichwald (DE); WEIL, Manfred, D-73614 Schorndorf (DE)
(74) Vertreter: Mörtel, Alfred, Dr. Dipl.-Phys.
(86) Internationale Anmeldenummer: EP9805555
(87) Internationale Veröffentlichungsnummer: WO9911482

(56) Entgegenhaltungen:
- EP-A- 0 000 188
- JP-A- 8 042 407
- US-A- 5 197 442
- US-E- R E35 054

## Beschreibung

Die Erfindung bezieht sich auf ein Kraftstoffbehältersystem, insbesondere für Kraftfahrzeuge und ein Verfahren zu seiner Steuerung und Überwachung. Unter Behältersystem wird hier ein mobiler oder stationärer befüll- und entleerbarer Tank, insbesondere ein Kraftstofftank für ein Fahrzeug, verstanden. Als nächstkommender Stand der Technik kann die JP-A-08 042 407 angesehen werden.

Bei derartigen Behältersystemen für Kraftstoff oder auch andere flüchtige Flüssigkeiten sollen üblicherweise Emissionen von Kraftstoff- bzw. Flüssigkeitsdämpfen vermieden werden. Bei Behältersystemen für Kraftfahrzeuge werden betriebsbedingte und während einer Betankung entstehende Emissionen vermieden, indem der oberhalb des Flüssigkeitsspiegels im Behälter vorhandene und ein in Abhängigkeit vom Füllstand variierendes Ausgleichsvolumen bildende Gasraum über wenigstens einen Entlüftungskanal mit einem Adsorptionsfilter, etwa einem Aktivkohlefilter, verbunden ist. In neuerer Zeit werden zusehends Behältersysteme eingesetzt, bei denen der Betankungsvorgang durch verschiedene Sensoren überwacht wird. So ist beispielsweise in US 5,197,442 ein Behältersystem für ein Kraftfahrzeug beschrieben, bei dem der Behälterinnendruck mittels eines Sensors abgegriffen und der Öffnungszustand der Entlüftungsleitung in Abhängigkeit vom Tankinnendruck gesteuert wird. Weiterhin ist es bekannt, zur Steuerung und Überwachung des Betankungsvorgangs weitere Parameter zu erfassen. So ist beispielsweise in US-Re. 35,054 ein Behältersystem für ein Kraftfahrzeug beschrieben, bei dem neben dem Tankinnendruck noch die Temperatur des Kraftstoffes und dessen Füllstand abgegriffen wird. Mit den Überwachungseinrichtungen der bekannten Behältersysteme ist zwar der Übertritt von Kraftstoffdampf oder Kraftstoff über die Entlüftungsleitungen verhindert. Das Einfüllen von Kraftstoff über das Einfüllrohr bzw. den Einfüllkanal selbst und die damit im Zusammenhang stehenden Probleme, etwa das Austreten von Kraftstoff über den Einfüllkanal aufgrund eines zu hohen Tankinnendrukkes oder aufgrund einer Übertankung sind jedoch nicht in wünschenswertem Maße berücksichtigt.

Aufgabe der Erfindung ist es, ein in dieser Hinsicht verbessertes Behältersystem sowie ein Verfahren zu dessen Überwachung und Steuerung anzugeben.

Bezüglich des Verfahrens wird die genannte Aufgabe erfindungsgemäß gelöst durch die Merkmale des Anspruches 1. Danach wird als Parameter für die Überwachung und Steuerung des Behältersystems der in den Behälter einströmende Kraftstofffluss von einem Durchflußsensor detektiert und der Betankungs vorgang gesteuert und überwacht. Mit Hilfe dieses Sensors kann beispielsweise festgestellt werden, ob ein Zapfventil bzw. eine Zapfpistole etwa bei einem vorgesehenen Kraftstoff-Füllstand des Kraftstoffbehälters abschaltet oder nicht. Es kann also eine Störung des Zapfventils vom Behälter-Überwachungssystem erfasst und entsprechende Aktionen in Gang gesetzt werden, beispielsweise der Adsorptionsfilter vor einer Überschwemmung mit flüssigem Kraftstoff geschützt werden. Weiterhin läßt sich mit Hilfe des vorgeschlagenen Sensors feststellen, ob beispielsweise nach dem Abschalten des Zapfventils von der Bedienperson versucht wird, weiteren Kraftstoff in den Behälter einzufüllen, etwa um die Literzahl oder den für den Kraftstoff zu entrichtenden Betrag aufzurunden.

Bei einer bevorzugten Verfahrensvariante wird bei Vorhandensein eines Kraftstoffflusses im Einfüllrohr der Gasraum des Behälters über einen zusätzlichen Entlüftungskanal mit dem Adsorptionsfilter verbunden. Üblicherweise ist bei Behältersystemen der in Rede stehenden Art eine Betriebsentlüftung vorhanden, die durch einen Entlüftungskanal mit kleinerem Durchflussquerschnitt bewerkstelligt wird. Beim Befüllen des Kraftstoffbehälters müssen wesentlich größere Gasmengen zum Adsorptionsfilter geleitet werden. Dies wird durch Zuschaltung eines zusätzlichen Entlüftungskanals mit größerem Durchflussquerschnitt gewährleistet. Bei dem aus US 5,197,442 bekannten System wird die zusätzliche Entlüftungsleitung freigegeben, wenn die Tankklappe geöffnet ist. Dies hat den Nachteil, dass bei versehentlich offengebliebener Tankklappe auch während des normalen Betriebes die Betankungsentlüftung aktiv ist. Außerdem kann das Kriterium "Tankklappe offen oder zu" kaum für weitere etwa das Auftanken betreffende Steuerungs- und Überwachungsaufgaben herangezogen werden. Dies ist bei dem vorgeschlagenen Verfahren anders.

So wird beispielsweise bei einer weiteren bevorzugten Verfahrensvariante bei Erreichen eines ersten Kraftstoff-Füllstandes der Zustrom von Kraftstoff in den Behälter verringert. Infolge einer Drosselung oder eines gegebenenfalls mehrmaligen kurzzeitigen Verschließens des Einfüllkanals steigt der Kraftstoff schnell bis zum Zapfenventil an bzw. wird bis zu diesem hochgewirbelt. Die Folge ist, dass das Zapfventil abschaltet. Der Bedienperson wird somit angezeigt, dass das Behältersystem bis zu einem ersten Füllstand bzw. einem Nennvolumen aufgefüllt, im Wesentlichen also "voll" ist. Der Einfüllkanal wird nur für eine vorgegebene Zeitdauer gedrosselt oder vollständig abgeschlossen. Danach kann der Kraftstoff bei geöffnetem Einfüllkanal in den Tank abfließen. Ob die vorgenommene Maßnahme tatsächlich zum Abschalten der Zapfpistole geführt hat oder nicht, wird dem System über den Durchfluss-Sensor gemeldet, der im Falle des Abschaltens des Zapfventils und nach dem Abfließen des Kraftstoffes aus dem Einfüllkanal ein entsprechendes Signal erzeugt. Durch den Durchfluss-Sensor erhält das Überwachungssystem somit eine ständige Rückmeldung darüber, ob eine auf das Abschalten des Zapfventils gerichtete Maßnahme zum Erfolg geführt hat oder nicht.

Wenn ein Zapfventil bauartbedingt oder aufgrund einer Störung nicht abschaltet oder wenn nachgetankt wird, um den Kraftstoffbehälter "randvoll" zu füllen, besteht die Gefahr, dass Kraftstoff über die Entlüftungsleitung zum Adsorptionsfilter gelangt. Um dies zu verhindern, ist bei einer weiteren Verfahrensvariante vorgesehen, dass bei Erreichen eines zweiten maximalen Füllstandes sämtliche Verbindungen zwischen dem Behälter und dem Adsorptionsfilter unterbrochen werden und die Durchflussöffnung des Einfüllkanals verschlossen wird. Eine Überschwemmung des Adsorptionsfilters mit Kraftstoff ist dadurch verhindert. Außerdem steigt sofort nach Verschluss des Einfüllkanals Kraftstoff nach oben, wodurch entweder die ordnungsgemäß funktionierende Zapfpistole abschaltet oder, wenn dies aufgrund einer Störung nicht der Fall ist, Kraftstoff aus der Einfüllöffnung des Einfüllkanals herausfließt. Bei der in Rede stehenden Grenzsituation ist es zweckmäßig, wenn nicht nur sämtliche Verbindungen zum Adsorptionsfilter, also auch die Betriebsentlüftung, unterbrochen werden, sondern der die Betriebsentlüftung gewährleistende Entlüftungskanal mit der Atmosphäre verbunden wird. Über diese Verbindung kann dann zusätzlich Kraftstoff abfließen.

Bei Verfahren bzw. Behältersystemen der in Rede stehenden Art tritt weiterhin das Problem auf, dass während des Betankens Kraftstoff-Luft-Gemisch - im folgenden kurz Entlüftungsgas genannt - über den Einfüllkanal nach außen gelangen kann. Bei manchen Systemen wird dies durch eine elastische Manschette verhindert, die das Zapfrohr eines in den Einfüllkanal eingesteckten Zapfventils dichtend umfasst. Bei anderen Systemen wird der Ringspalt zwischen dem Außenumfang des Zapfrohres und der Wand des Einfüllkanals möglichst gering gehalten. Diese mit "liquid seal" bezeichnete Dichtung arbeitet nach dem Saugstrahlpumpen-Prinzip. Wenn Kraftstoff gefördert wird, entsteht auf der Behälterseite des Ringspaltes ein Unterdruck, der einen nach innen gerichteten Luftstrom durch den Ringspalt zur Folge hat. Die permanente Abdichtung hat den Nachteil, dass sie in der oben beschriebenen Grenzsituation den Austritt von Kraftstoff verhindert. Die nach dem Unterdruck- bzw. Venturi-Prinzip arbeitende Dichtung hat den Nachteil, dass sie nur zufriedenstellend arbeitet, wenn Kraftstoff mit relativ hohem Volumenstrom gefördert wird. Bei einer vorgeschlagenen Verfahrensvariante wird der genannte Ringspalt zwischen dem Zapfrohr und dem Rand des Einfüllkanals während der Betankungsphase abgedichtet und nach beendigter Betankung bzw. bei Erreichen des ersten oder zweiten Füllstandes wieder geöffnet. Dadurch ist während des Auftankens eine hermetische Abdichtung auch bei zwischenzeitlich unterbrochener Krafftstoffbeschickung und ein Notaustritt von Kraftstoff im Falle eines Übertankens gewährleistet. Die Abdichtung des Ringspaltes kann entweder dann vorgenommen werden, wenn ein Kraftstofffluss im Einfüllkanal detektiert wird oder wenn das Zapfventil mit seinem Zapfrohr in den Einfüllkanal eingesteckt ist. Im letztgenannten Fall ist ein geeigneter Sensor erforderlich.

Bezüglich des Kraftstoffbehälterssystems wird die genannte Aufgabe erfindungsgemäß gelöst durch die Merkmale des Anspruches 10. Danach ist bei einem Kraftstoffbehälter mit einem Einfüllrohr und einem mit dem Gasraum des Behälters verbundenen Adsorpionsfilter im Einfüllrohr ein Durchfluss-Sensor angeordet, der das Vorhandensein oder Nichtvorhandensein eines Kraftstoffflusses detektiert. Der Durchfluss-Sensor kann so gestaltet sein, dass er die Größe des Kraftstoffstromes angibt. Dies kann beispielsweise durch eine in den Durchflussquerschnitt des Einfüllkanals hineinragende Prallplatte bewerkstellt werden, deren Neigung sich bei auftreffendem Kraftstoff je nach Größe des Kraftstoffstromes mehr oder weniger verändert. Vorzugsweise wird jedoch ein kapazitiv arbeitender Durchfluss-Sensor verwendet, da die Größe des Kraftstoffflusses zur Durchführung der in Rede stehenden Steuerungsaufgaben nicht unbedingt ermittelt werden muss. Außerdem arbeitet ein kapazitiver Sensor sehr zuverlässig und störungsfrei. Bei einem solchen Sensor reicht es aus, wenn sein den Kraftstoff detektierender Bereich des Einfüllrohres angeordnet ist.

Die Reduzierung bzw. das vollständige Unterbrechen des Kraftstoffflusses in den Behälter wird vorzugsweise durch ein im Bereich des behälterseitigen Endes des Einfüllrohres angeordnetes Durchfluss-Steuerventil bewerkstelligt, das füllstandsabhängig gesteuert ist. Dazu ist im Behälter ein Füllstandssensor vorhanden. Das Durchfluss-Steuerventil ist so ausgestaltet, dass der vom Einfüllrohr in den Kraftstoffbehälter übertretende Kraftstoffstrom gedrosselt oder unterbrochen werden kann. Sowohl die Drosselung als auch die Unterbrechung des Kraftstoffstromes dauern jeweils eine vorbestimmte Zeitspanne an. Danach wird das Einfüllrohr wieder geöffnet.

Bei einer bevorzugten Ausgestaltung ist die Abdichtung des bereits erwähnten Ringspaltes zwischen dem Zapfrohr eines Zapfventils und der Einfüllöffnung durch eine das Zapfrohr umfassende Dichtblende mit motorisch, also mit Hilfe eines Stellelements, beispielsweise eines Elektromagneten, veränderbarer Blendenöffnung bewerkstelligt. Die Blendenöffnung ist so eingestellt, dass nach dem Öffnen des Tankdeckels das Zapfrohr behinderungsfrei in den Einfüllkanal eingeführt werden kann. Anschließend wird die Blendenöffnung mit Hilfe eines Motors, insbesondere eines Elektromotors verengt. Die Dichtblende ist vorzugsweise im Wesentlichen von einer zumindest in Radialrichtung elastisch verformbaren Hülse gebildet. Die Verengung erfolgt bei einer Ausführungsform dadurch, dass die Hülse von einer motorisch verengbaren Seilschlinge umfasst ist. Bei einer alternativen Ausgestaltung liegt die elastisch verformbare Hülse in einer Radialausnahme des Einfüllrohres im Wesentlichen formschlüssig ein, wobei die Länge bzw. die Axialerstreckung der Ausnehmung motorisch veränderbar ist. Wenn die Axialerstreckung der Radialausnehmung verkürzt wird, wird die Hülse axial zusammengepresst, wodurch sich ihre Innenwand konkav in den Einfüllkanal vorwölbt und das genannte Zapfrohr dichtend umfasst.

Nachfolgend werden Ausführungsbeispiele der Erfindung anhand beigefügter Zeichnungen näher erläutert. Es zeigen:
- Fig. 1: ein Kraftstoffbehältersystem mit zur Durchführung eines Verfahrens zur Überwachung und Steuerung insbesondere des Betankungsvorgangs vorgesehenen Komponenten,
- Fig. 2: eine schematische Schnittdarstellung eines Durchfluss-Steuerventils,
- Fig. 3: eine zum Teil geschnittene Draufsicht auf eine Dichtblende,
- Fig. 4: eine elastische Hülse als wesentliches Bestandteil einer Dichtblende in Längsschnittdarstellung, und
- Fig. 5: das Einfüllende eines Einfüllrohres in Schnittdarstellung mit einer alternativ ausgestalteten Dichtblende.

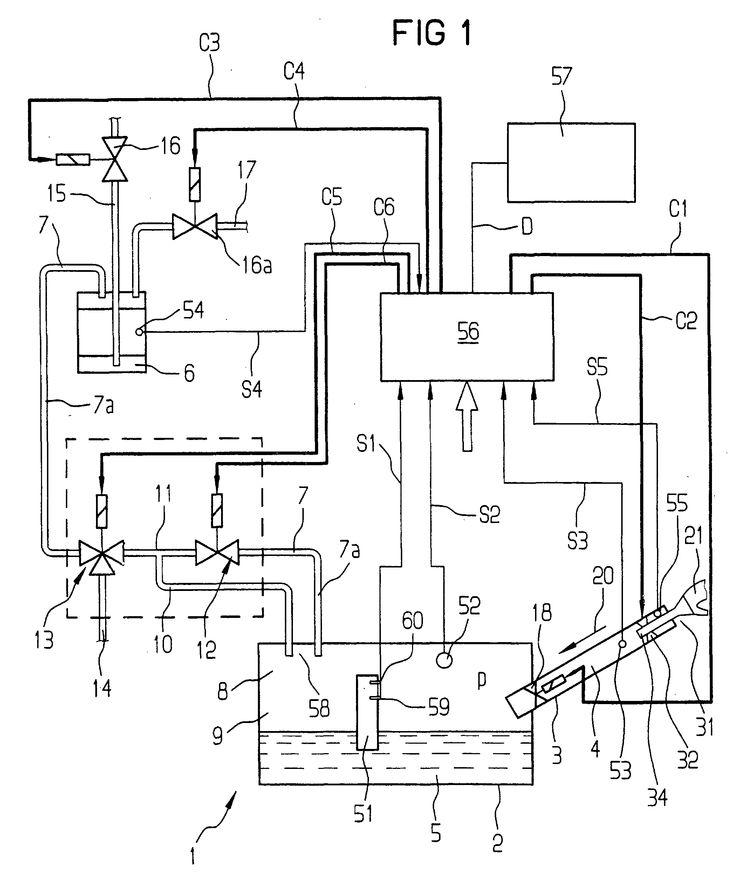

In Fig. 1 ist beispielhaft das Behältersystem 1 eines Kraftfahrzeuges schematisch dargestellt. Das Behältersystem 1 umfasst einen Behälter 2 oder Kraftstofftank mit einem von einem Einfüllrohr 3 gebildeten Einfüllkanal 4 zum Einfüllen von Kraftstoff 5 in den Behälter 2. Das Behältersystem 1 umfasst weiterhin einen Adsporptionsfilter 6, der über eine erste Entlüftungsleitung 7 mit dem sich oberhalb des Flüssigkeitsspiegels im Behälter 2 befindlichen Gasraum 8 verbunden ist. Im Gasraum 8 befindet sich ein Kraftstoff-Luft-Gemisch oder Entlüftungsgas 9. Vom Gasraum 8 zweigt eine zweite Entlüftungsleitung 10 ab, die in die erste Entlüftungsleitung 7 mündet. Die zweite Entlüftungsleitung 10 weist einen kleineren Durchmesser auf als die erste Entlüftungsleitung 7, sie dient der Betriebsentlüftung. In dem sich von der Mündungsstelle 11 bis zum Behälter 2 erstreckenden Teilabschnitt 7a ist ein elektromagnetisch betätigtes und als 2/2-Wegeventil ausgebildetes Absperrventil 12 eingeschaltet. In dem sich zwischen der Mündungsstelle 11 und dem Adsorptionsfilter 6 erstreckenden Teilabschnitt 7b der ersten Entlüftungsleitung 7 ist ein elektromagnetisch betätigtes, als 3/2-Wegeventil ausgebildetes Absperrventil 13 eingeschaltet. Zwei der Anschlüsse dieses Ventils sind von den Teilabschnitten 7a und 7b der ersten Entlüftungsleitung 7 und dessen dritter Anschluss von einer Ablaufleitung 14 belegt.

Die Ausgangsseite des Adsorptionsfilters 6 ist über eine Leitung 15 mit der Atmosphäre verbunden. In die Leitung 15 ist ein elektromagnetisch betätigtes Absperrventil 16 eingeschaltet. Die Eingangsseite des Adsorptionsfilters 6 schließlich ist über eine Saugleitung 17 mit zwischengeschaltetem Regenerierventil 16a mit dem Ansaugrohr eines Fahrzeugmotors (nicht dargestellt) verbunden.

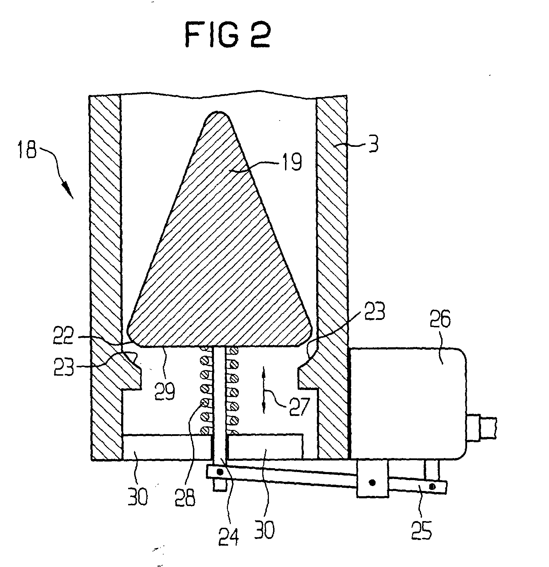

In dem unteren bzw. dem Behälter 2 naheliegenden Ende des Einfüllrohres 3 ist ein Durchfluss-Steuerventil 18 angeordnet, das elektromagnetisch betätigt ist. Das Durchfluss-Steuerventil kann unterschiedlich ausgestaltet sein. Bei dem in Fig. 2 dargestellten Ausführungsbeispiel ist es ein Absperrventil mit zwei Schaltstellungen dargestellt. Das Schließelement 19 des Ventils ist als Kegel ausgebildet, wobei die Spitze des Kegels vom Behälter 2 weg bzw. gegen die Einfüllrichtung 20 zeigt. Diese Ausgestaltung des Schließelements ist besonders strömungsgünstig und setzt daher dem von einem Zapfventil 21 in das Einfüllrohr 3 abgegebenen Kraftstofffluss nur einen geringen Strömungswiderstand entgegen. Der untere Rand 22 des Schließelements ist abgerundet und wirkt mit einem komplementär ausgestalteten, von der Innenwand des Einfüllrohres 3 radial nach innen vorspringenden Ventilsitz 23 zusammen. Von der Basisfläche 29 des kegelförmigen Schließelements 19 steht ein Betätigungsstift 24 ab, der von dem Antriebshebel 25 eines Elektromagneten 26 bzw. Stellelements in Richtung des Doppelpfeiles 27 hin-und herbewegbar ist. Der Betätigungsstift 24 ist von einer Druckfeder 28 umfasst, die sich einerseits an der Basisfläche 29 des Schließelements 19 und andererseits an Stützstreben 30 abstützt, die sich von der Innenwand des Einfüllrohres 3 radial nach innen erstrecken. Das Durchfluss-Steuerventil 18 weist zwei Schaltstellungen auf, wobei es in der einen Schaltstellung geöffnet (Fig. 2) und in der anderen Schaltstellung geschlossen ist, d.h. das Schließelement 19 mit seinem Rand 22 am Ventilsitz 23 anliegt.

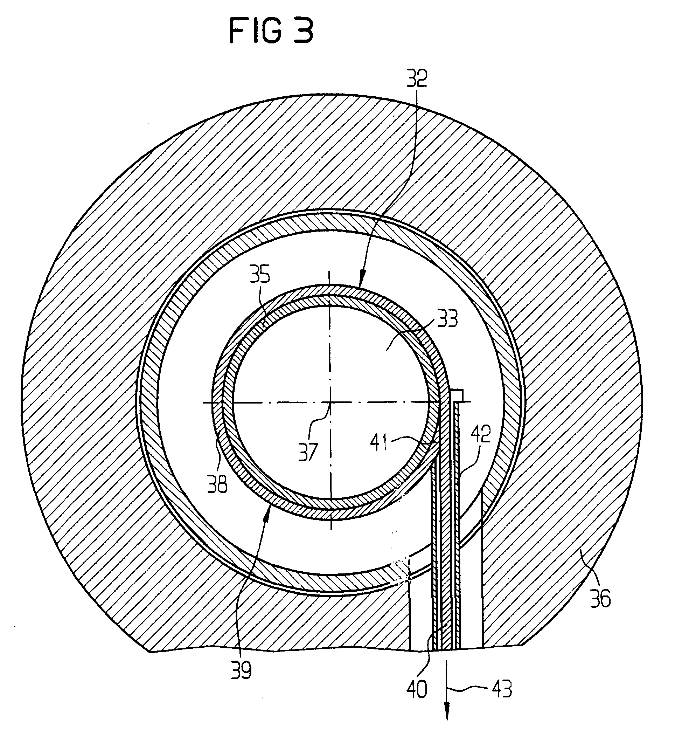

Im Einfüllrohr 3 ist nahe dessen Einfüllöffnung 31 eine motorisch verengbare Dichtblende 32 angeordnet. Die Blendenöffnung 33 kann so weit verkleinert werden, dass das im Einfüllrohr 3 einliegende Zapfrohr 34 eines Zapfventils 21 hermetisch dicht umfasst ist. In Fig. 3 ist ein Ausführungsbeispiel einer Dichtblende dargestellt. Wesentlicher Bestandteil der Dichtblende 21 ist eine zumindest in Radialrichtung elastisch verformbare Hülse 35 aus einem kraftstoffresistenten Elastomer. Die Hülse 35 ist innerhalb eines am Einfüllende des Einfüllrohres 3 angeordneten Gehäuses 36 angeordnet, wobei ihre Mittellängsachse 37 im Wesentlichen auch die Mittellängsachse des die Hülse 35 umfassenden Bereichs des Einfüllrohres 3 bildet. Um den Außenumfang der Hülse 35 ist ein Seil 38 in Form einer Seilschlinge 39 gelegt. Das eine Ende 40 der Seilschlinge 39 ist tangential von der Hülse 35 weggeführt und ist mit einem Antrieb (nicht dargestellt) verbunden. Das andere Ende 41 der Seilschlinge 39 ist im Bereich des Außenumfangs der Hülse 35 an einem Rohr 42 befestigt, in dem das Ende 40 der Seilschlinge geführt ist. Wenn das Seilende 40 in Richtung des Pfeiles 43 bewegt wird, verengt sich die Blendenöffnung 33. Der Außenumfangsbereich, an dem die Seilschlinge 39 anliegt, weist eine ringförmige Einschnürung 44 auf. In Fig. 5 ist eine alternative Ausgestaltung einer Dichtblende 32a dargestellt. Die elastisch verformbare Hülse 35a liegt hier im Wesentlichen formschlüssig in einer Radialausnehmung 45 des Einfüllrohres 3 bzw. eines die Einfüllöffnung 31 bildenden separaten Teils ein. Die der Einfüllöffnung 31 abgewandte Stirnseite 46 der Hülse 35a ist konusförmig ausgebildet, wobei sich die Konusfläche zur Einfüllöffnung 31 hin öffnet. Sie wirkt mit der ebenfalls konusförmig ausgebildeten Stirnseite 47 eines im Wesentlichen rohrförmigen, in Richtung der Mittellängsachse 37 beweglichen Antriebsteiles 48 zusammen. Wird das Antriebsteil von einem (nicht dargestellten) Stellelement in Richtung des Pfeiles 49 bewegt, krümmt sich die Innenwandung 50 der Hülse 35a radial nach innen und umfasst ein in die Einfüllöffnung 31 eingestecktes Zapfrohr.

Neben den eben beschriebenen Komponenten umfasst das Behältersystem 1 weiterhin mehrere Sensoren, nämlich einen Füllstandssensor 51, einen Drucksensor 52, die beide im Behälter 2 angeordnet sind, einen zumindest mit seinem sensitiven Teil innerhalb des Einfüllrohres 3 zwischen der Dichtblende 32 und dem Durchfluss-Steuerventil 18 angeordneten Durchfluss-Sensor 53, einen Beladungssensor 54, der die Beladung des Adsorptionsfilters 6 mit Kraftstoffdampf erfasst sowie einen Zapfventilsensor 55. Letzterer ist zwischen der Dichtblende 32 und der Einfüllöffnung 31 oder am Einfüllrohr angeordnet und detektiert die Anwesenheit des Zapfrohres 34 eines Zapfventiles 21. Die genannten Sensoren sind über Signalleitungen S1-S5 mit einem Steuerbaustein 56 verbunden. Der Steuerbaustein 56 wiederum steuert über Steuerleitungen C1-C6 die Ventile 12,13,16,16a,18 sowie die Dichtblende 32 an. Mit dem Steuerbaustein 56 über eine Datenleitung D verbunden oder in ihm integriert ist ein Diagnosebaustein 57, mit dem beispielsweise eine Leckageüberprüfung des Behältersystems 1 vorgenommen werden kann.

Die Arbeitsweise eines erfindungsgemäßen Behältersystems wird nun näher erläutert:

Im Betriebszustand, bei dem die Einfüllöffnung 31 des Einfüllrohres 3 durch einen Tankdeckel (nicht dargestellt) verschlossen ist, ist das Absperrventil 12 geschlossen. Das Absperrventil 13 befindet sich in einer Schaltstellung, bei der die beiden Abschnitte 7a und 7b der ersten Entlüftungsleitung 7 miteinander in Verbindung stehen und die Ablaufleitung 14 verschlossen ist. Die Entlüftung des Behälters, etwa im Falle einer Erwärmung des Kraftstoffs, erfolgt über die zweite Entlüftungsleitung 10 und den Abschnitt 7b der ersten Entlüftungsieitung 7. Wenn oben und im Folgenden von Entlüftung gesprochen wird, so ist damit auch eine Belüftung gemeint, bei der über den genannten Weg Außenluft in den Behälter 2 angesaugt wird, etwa wenn sich der Kraftstoffspiegel absenkt. Der Drucksensor 52 überwacht sowohl im Betriebszustand als auch im Betankungsfall den Behälterinnendruck und leitet ein entsprechendes Sensorsignal über die Signalleitung S2 an den Steuerbaustein 56 weiter. Übersteigt der Behälterinnendruck p einen vorgegebenen Wert, so kann zusätzlich auch das Absperrventil 12 geöffnet werden, um einen schnellen Druckabbau zu gewährleisten. Durch die Drucküberwachung ist der Behälter 2 somit im Regelfall im Wesentlichen drucklos. Bei einer alternativen Ausgestaltung eines Behältersystems kann anstelle des Absperrventils 13 innerhalb des Behälters 2, etwa an der Stelle 58 ein herkömmliches Schwimmerventil mit Roll-over-Funktion angeordnet sein. Ein solches Ventil hält die Entlüftungsleitung 10 im Regelfall offen. Nur wenn der Schwimmer des Ventils durch emporschwappenden Kraftstoff angehoben wird oder das Fahrzeug in eine extreme Schräg- oder in eine Kopflage gerät, wird die Entlüftungsleitung 10 verschlossen.

Der Beladungssensor 54 gibt über die Steuerleitung S4 ständig Meldung an den Steuerbaustein 56 über den Beladungszustand des Adsorptionsfilters 6. Wenn dieser einen bestimmten Schwellenwert übersteigt, wird das Regenerierventil 16a über die Steuerleitung C4 geöffnet, sofern sich der Fahrzeugmotor in einem definierten Betriebszustand befindet. Über die Saugleitung 17, die Leitung 15 und das normalerweise geöffnete Absperrventil 16 wird Atmosphärenluft durch den Adsorptionsfilter 6 gesaugt, wobei der adsorbierte Kraftstoff desorbiert und somit der Adsorptionsfilter regeniert wird. Als Filtermasse dient Aktivkohle. Nach beendigter Regenerierung wird das Regenerierventil 16a wieder geschlossen. Das Absperrventil 16 bleibt dagegen geöffnet, um die Betriebsentlüftung zu gewährleisten.

Wenn der Behälter 2 mit Kraftstoff aufgefüllt werden soll, wird zunächst der Tankdeckel (nicht dargestellt) von der Einfüllöffnung 31 des Einfüllrohres 3 entfernt. Da im Behälter 2 im Normalfall Atmosphärendruck herrscht, tritt bei geöffnetem Tankdeckel allenfalls nur eine zu vernachlässigende Menge an Entlüftungsgas aus der Einfüllöffnung 31 aus. Sollte - etwa aufgrund einer Störung der Betriebsentlüftung - sich im Tank ein Überdruck befinden, wird ein Herausstoßen von Kraftstoff aus der Einfüllöffnung 31 infolge der plötzlichen Druckentlastung beim Abnehmen des Tankdeckels durch das den Durchflussquerschnitt es Einfüllrohres 3 selbst in seiner geöffneten Stellung verringernde Durchfluss-Steuerventil 18 im Wesentlichen verhindert.

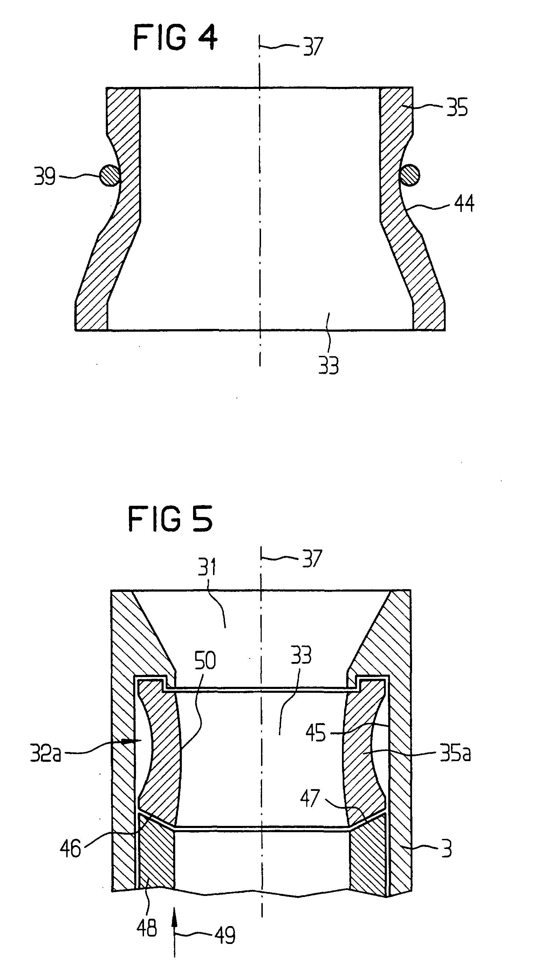

Sobald ein in die Einfüllöffnung 31 eingestecktes Zapfventil 21 Kraftstoff fördert, wird der Durchfluss-Sensor 53 aktiv und übermittelt ein entsprechendes Signal an den Steuerbaustein 56. Dies hat zwei Aktionen zur Folge. Zum einen wird das Absperrventil 12 geöffnet, um eine Entlüftung über den Entlüftungsleitungsabschnitt 7a mit seinem großen Innendurchmesser zu gewährleisten. Zum anderen wird über die Steuerleitung C2 die Dichtblende 32 angesteuert, wodurch sich die Hülse 35 (Fig. 3-5) hermetisch dicht um das Zapfrohr 34 des Zapfventils 21 legt. Ein Austritt von Kraftstoffdampf über das Einfüllrohr 3 ist damit verhindert. Es ist auch denkbar, dass die beiden Aktionen, nämlich das Öffnen des Absperrventils 12 und das Schließen der Dichtblende 32 aufgrund eines anderen Startsignals ausgelöst werden, nämlich wenn der Zapfventilsensor 55 die Anwesenheit eines Zapfrohres 34 detektiert.

Wenn der Kraftstoff 5 im Behälter 2 einen ersten Füllstand 59 erreicht hat und der Durchlfluss-Sensor 53 einen Kraftstofffluss meldet, wird das Durchfluss-Steuerventil 18 zumindest einmal für eine vorgegebene kurze Zeitspanne geschlossen. Die Folge ist, dass dann sehr schnell wenigstens Kraftstoffspritzer zum Zapfventil 21 gelangen und dieses abschaltet. Nach Ablauf der genannten Zeitspanne öffnet das Durchfluss-Steuerventil wieder, so dass der Kraftstoff, der sich im Einfüllrohr 3 angesammelt hat, in den Behälter 2 abfließen kann. Das Durchfluss-Steuerventil 18 wird also getaktet geschlossen. Das Steuerventil 18 kann aber auch so ausgestaltet sein, dass es den Durchflussquerschnitt des Einfüllrohres drosselt mit der Folge, dass die aus dem Zapfventil 21 zugeführte Kraftstoffmenge größer ist als die in den Behälter 2 abfließende, wodurch ebenfalls Kraftstoff im Einfüllrohr 3 nach oben steigt und zum Zapfventil 21 gelangt.

Wenn der Durchfluss-Sensor 53 keinen Kraftstoff mehr anzeigt, wird nach Ablauf einer vorgegebenen Zeitspanne die Dichtblende 32 geöffnet und das Absperrventil 12 geschlossen. Das Ende der Betankung ist erreicht. Im Normalfall wird nun auf die Einfüllöffnung 31 ein Tankdeckel aufgesetzt.

Wenn der erste Füllstand 59 erreicht ist und der Durchfluss-Sensor 53 weiterhin einen Kraftstofffluss anzeigt, wird das Durchfluss-Steuerventil 18 wieder getaktet geschlossen, d.h. es wird kurzzeitig geschlossen und wieder geöffnet. Ein normales Betanken, wie oben beschrieben, ist somit nach Erreichen des ersten Füllstandes 59 nicht mehr möglich, da der Abfluss des Kraftstoffes in den Behälter 2 durch das Ventil 18 andauernd behindert wird. Es wird daher mehr Kraftstoff in das Einfüllrohr 3 gefördert, als in den Behälter 2 einfließen kann. Dies hat zur Folge, dass nach jeweils relativ geringen Fördermengen das Zapfventil 21 abschaltet. Die Dichtblende 32 bleibt während dieser "Nachtankphase" geschlossen.

Wenn ein zweiter maximaler Füllstand 60 erreicht wird - sei es aufgrund mehrerer Nachtankschritte oder deshalb, weil das Zapfventil 21 aufgrund einer Störung nicht abschaltet - wird das Durchfluss-Steuerventil 18 geschlossen und nach Ablauf einer vorgegebenen Zeitspanne die Dichtblende 32 geöffnet. Sofort nach Erreichen des zweiten Füllstandes 60 wird das Absperrventil 12 geschlossen, so dass kein Kraftstoff über die Entlüftungsleitung 7a zum Adsorptionsfilter 6 gelangen kann. Die Entlüftungsleitung 10 hat einen relativ kleinen Innendurchmesser, so dass über diese Leitung kaum Kraftstoff zum Adsorptionsfilter 6 fließen kann. Um diese Möglichkeit mit Sicherheit auszuschließen, kann das Absperrventil 13 ebenfalls geschlossen werden, wobei dann evtl. in die Entlüftungsleitung 10 eintretender Kraftstoff über die Ablaufleitung 14 in die Umgebung abfließen kann. Es ist aber auch denkbar, dass in beiden Entlüftungsleitungen 10,7a ein Schwimmer-Roll-Over-Ventil integriert ist. Ein Übertritt von Kraftstoff in die Entlüftungsleitungen 7a bzw. 10 ist aber im Normalfall dadurch verhindert, dass das Durchfluss-Steuerventil 18 im Wesentlichen sofort nach Erreichen des maximalen Füllstandes 60 geschlossen wird. Falls das Zapfventil 21 weiter Kraftstoff fördert, tritt dieser über die geöffnete Dichtblende 32 in die Umgebung aus.

Das obenerwähnte Absperrventil 13 kann auch als 3/3-Wegeventil ausgebildet sein.

### Bezugszeichenliste

- 1: Behältersystem
- 2: Behälter
- 3: Einfüllrohr
- 4: Einfüllkanal
- 5: Kraftstoff
- 6: Adsorptionsfilter
- 7: erste Entlüftungsleitung
- 8: Gasraum
- 9: Entlüftungsgas
- 10: zweite Entlüftungsleitung
- 11: Mündungsstelle
- 12: erstes Absperrventil
- 13: zweites Absperrventil
- 14: Ablaufleitung
- 15: Leitung
- 16: Absperrventil
- 16a: Regenerierventil
- 17: Saugleitung
- 18: Durchfluss-Steuerventil
- 19: Schließelement
- 20: Einfüllrichtung
- 21: Zapfventil
- 22: Rand
- 23: Ventilsitz
- 24: Betätigungsstift
- 25: Antriebshebel
- 26: Elektromagnet
- 27: Doppelpfeil
- 28: Druckfeder
- 29: Basisfläche
- 30: Stützstrebe
- 31: Einfüllöffnung
- 32: Dichtblende
- 32a: Dichtblende
- 33: Blendenöffnung
- 34: Zapfrohr
- 35: Hülse
- 35a: Hülse
- 36: Gehäuse
- 37: Mittellängsachse
- 38: Seil
- 39: Seilschlinge
- 40: Ende
- 41: Ende
- 42: Rohr
- 43: Pfeil
- 44: Einschnürung
- 45: Radialausnehmung
- 46: Stirnseite
- 47: Stirnseite
- 48: Antriebsteil
- 49: Pfeil
- 50: Innenwand
- 51: Füllstandssensor
- 52: Drucksensor
- 53: Durchfluss-Sensor
- 54: Beladungssensor
- 55: Zapfventilsensor
- 56: Steuerbaustein
- 57: Diagnosebaustein
- 58: Stelle
- 59: erster Füllstand
- 60: zweiter Füllstand

- S1-S5: Signalleitungen
- C1-C6: Steuerleitungen
- D: Datenleitung
- p: Behälterinnendruck

## Patentansprüche

1. Verfahren zur Befüllung eines einen Einfüllkanal (4) aufweisenden Kraftstoffbehälters (2), bei dem der in den Behälter einströmende Kraftstofffluss von einem Durchflußsensor (53) detektiert und ein vom Sensor (53) erzeugtes Sensorsignal dazu verwendet wird, den Betankungsvorgang mit Hilfe eines Steuerbausteins (56) zu steuern und zu überwachen.

2. Verfahren nach Anspruch 1, wobei bei Vorhandensein eines Kraftstoffflusses der Gasraum (8) des Behälters (2) über eine zusätzliche Entlüftungsleitung (7) mit einem Adsorptionsfilter (6) verbunden wird.

3. Verfahren nach Anspruch 1 oder 2, wobei bei Erreichen eines ersten Kraftstoff-Füllstandes (59) die Durchflussöffnung des behälterseitigen Endes des Einfüllkanals (4) gedrosselt wird, wenn im Einfüllkanal ein Kraftstofffluss vorhanden ist.

4. Verfahren nach Anspruch 2, wobei bei Erreichen eines ersten Kraftstoff-Füllstandes (59) die Durchflussöffnung des behälterseitigen Endes des Einfüllkanals (4) zumindest einmal kurzzeitig verschlossen wird, sofern im Einfüllkanal ein Kraftstofffiuss vorhanden ist.

5. Verfahren nach Anspruch 3 oder 4, wobei bei Erreichen eines zweiten Füllstandes (60) zumindest die über den zusätzlichen Entlüftungskanal (7a) bewerkstelligte Verbindung zwischen dem Behälter (2) und dem Adsorptionsfilter (6) unterbrochen und die Durchflussöffnung des Einfüllkanales (4) verschlossen wird.

6. Verfahren nach Anspruch 5, wobei eine weitere, eine Betriebsentlüftung gewährleistende Verbindung zwischen dem Behälter (2) und dem Adsorptionsfilter (6) unterbrochen und eine Verbindung zwischen dem Behälter (2) und der Atmosphäre hergestellt wird.

7. Verfahren nach einem der Ansprüche 1 bis 6, wobei ein zwischen dem in das einfüllseitige Ende des Einfüllkanals (4) eingesteckten Zapfrohres (34) eines Zapfventils (21) und der Wand des Einfüllkanals (4) vorhandener Ringspalt während der Betankungsphase bis zum Erreichen des ersten Füllstandes (59) zur Atmosphäre hin abgedichtet, bei Erreichen des zweiten Füllstandes (60) jedoch geöffnet wird.

8. Verfahren nach Anspruch 7, wobei der Ringspalt abgedichtet wird, sobald ein Kraftstofffluss im Einfüllkanal (4) vorhanden ist.

9. Verfahren nach Anspruch 7, wobei der Ringspalt abgedichtet wird, sobald das in den Einfüllkanal eingesteckte Zapfrohr (34) des Zapfventils (21) von einem Sensor (55) detektiert wird.

10. Kraftstoffbehältersystem, insbesondere zur Durchführung des Verfahrens nach einem der Ansprüche 1 bis 9, mit
- einem Kraftstoffbehälter (2),
- einem in den Kraftstoffbehälter mündenden, einen Einfüllkanal (4) umgebenden Einfüllrohr (3),
- einem mit dem Gasraum (8) des Behälters (2) verbundenen Adsorbtionsfilter (6) und **gekennzeichnet durch**
- einen einen Kraftstofffluss im Einfüllrohr (3) detektierenden Durchflusssensor (53), welcher zur Steuerung und Überwachung des Betankungsvorgangs mit einem Steuerbaustein (56) signalmäßig verbunden ist.

11. Behältersystem nach Anspruch 10,
**dadurch gekennzeichnet,**
**dass** der Durchfluss-Sensor (53) ein kapazitiv arbeitender Sensor ist.

12. Behältersystem nach Anspruch 10 oder 11,
**dadurch gekennzeichnet,**
**dass** im Behälter (2) ein Füllstandssensor (51) und im Bereich des behälterseitigen Endes des Einfüllrohres (3) ein füllstandsabhängig steuerbares Durchfluss-Steuerventil (18) zu Drosselung oder Unterbrechung des vom Einfüllrohr (3) in den Kraftstoffbehälter (2) übertretenden Kraftstoffstroms angeordnet ist.

13. Behältersystem nach einem der Ansprüche 10 bis 12,
**dadurch gekennzeichnet,**
**dass** in dem das Zapfrohr (34) eines Zapfventils (21) aufnehmenden Bereich des Einfüllrohres (3) eine das Zapfrohr (34) umfassende Dichtblende (32) mit einer mit Hilfe eines Antriebs veränderbaren Blendenöffnung (33) angeordnet ist.

14. Behältersystem nach Anspruch 13,
**dadurch gekennzeichnet,**
**dass** die Dichtblende (32) im Wesentlichen von einer zumindest in Radialrichtung elastisch verformbaren Hülse (35) gebildet ist.

15. Behältersystem nach Anspruch 14,
**dadurch gekennzeichnet,**
**dass** der Außenumfang der Hülse (35) von einer motorisch verengbaren Seilschlinge (39) umfasst ist.

16. Behältersystem nach Anspruch 14,
**dadurch gekennzeichnet,**
**dass** die Hülse (35a) in einer Radialausnehmung (45) des Einfüllrohres (3) im Wesentlichen formschlüssig einliegt, deren Länge bzw. deren Axialerstreckung motorisch veränderbar ist.

17. Behältersystem nach einem der Ansprüche 10 bis 16,
**gekennzeichnet durch**
eine den Adsorptionsfilter (6) mit dem Behälter (2) verbindende erste Entlüftungsleitung (7) größeren Durchflussquerschnitts, in die ein erstes Absperrventil (12) geschaltet ist.

18. Behältersystem nach Anspruch 17,
**gekennzeichnet durch**
eine zweite Entlüftungsleitung (10) kleineren Durchflussquerrschnitts, die zwischen dem Adsorptionsfilter (6) und dem ersten Absperrventil (12) in die erste Entlüftungsleitung (7) mündet, wobei in Entlüftungsrichtung nach der Mündungsstelle (11) ein zweites Absperrventil (13) in der ersten Entlüftungsleitung (7) angeordnet ist.

19. Behältersystem nach Anspruch 18,
**dadurch gekennzeichnet,**
**dass** das zweite Absperrventil (13) als 3-/2-Wegeventil ausgebildet ist.

20. Behältersystem nach einem der Ansprüche 10 bis 19,
**gekennzeichnet durch**
einen den Behälterinnendruck (8) erfassenden Drucksensor (52).

21. Behältersystem nach einem der Ansprüche 10 bis 20,
**gekennzeichnet durch**
einen ein in das Einfüllrohr (3) eingeführtes Zapfventil (21) detektierenden Zapfventilsensor (55).

22. Behältersystem nach einem der Ansprüche 10 bis 21,
**dadurch gekennzeichnet,**
**dass** sämtliche Sensoren über Signalleitungen (S1-S5) an dem Steuerbaustein (56) angeschlossen sind.

23. Behältersystem nach Anspruch 22,
**dadurch gekennzeichnet,**
**dass** das Durchfluss-Steuerventil (18) sowie das erste und das zweite Absperrventil (12,13) elektromagnetisch betätigt und von dem Steuerbaustein (56) über Steuerleitungen (C1,C6,C5) angesteuert sind.

## Claims

1. Method for filling a fuel tank (2), which has a filling duct (4) and in which the flow of fuel flowing into the tank is detected by a flow sensor (53), and a sensor signal which is generated by the sensor (53) is used to control and monitor the refuelling operation with the aid of a control module (56).

2. Method according to Claim 1, in which, when a flow of fuel is present, the gas space (8) of the tank (2) is connected to an adsorption filter (6) via an additional vent line (7).

3. Method according to Claim 1 or 2, in which, when a first fuel level (59) is reached, the flow opening of the tank-side end of the filling duct (4) is restricted when a flow of fuel is present in the filling duct.

4. Method according to Claim 2, in which, when a first fuel level (59) is reached, the flow opening of the tank-side end of the filling duct (4) is closed briefly at least once, provided that a flow of fuel is present in the filling duct.

5. Method according to Claim 3 or 4, in which, when a second level (60) is reached, at least the connection between the tank (2) and the adsorption filter (6), which is produced via. the additional vent duct (7a), is interrupted and the flow opening of the filling duct (4) is closed.

6. Method according to Claim 5, in which a further connection, which ensures operational venting, between the tank (2) and the adsorption filter (6) is interrupted and a connection between the tank (2) and the atmosphere is produced.

7. Method according to one of Claims 1 to 6, in which an annular gap which is present between the wall of the filling duct (4) and the fuel pump tube (34) of a fuel pump nozzle (21) which has been fitted into the filling side end of the filling duct (4) is sealed during the refuelling phase with respect to atmosphere until the first level (59) is reached, but is opened when the second level (60) is reached.

8. Method according to Claim 7, in which the annular gap is sealed as soon as a flow of fuel is present in the filling duct (4).

9. Method according to Claim 7, in which the annular gap is sealed as soon as the fuel-pump tube (34), which has been fitted into the filling duct, of the fuel-pump nozzle (21) is detected by a sensor (55).

10. Fuel tank system, in particular for carrying out the method according to one of Claims 1 to 9, having
- a fuel tank (2),
- a filling tube (3) which opens into the fuel tank and surrounds a filling duct (4),
- an adsorption filter (6) which is connected to the gas space (8) of the tank (2), and **characterized by**
- a flow sensor (53) which detects a flow of fuel in the filling tube (3) and, in order to control and monitor the refuelling operation, is connected, in terms of signals, to a control module (56).

11. Tank system according to Claim 10, **characterized in that** the flow sensor (53), is a capacitive sensor.

12. Tank system according to Claim 10 or 11, **characterized in that** a level sensor (51) is arranged in the tank (2), and a flow-control valve (18), which can be controlled in a level-dependent manner, is arranged in the region of the tank-side end of the filling tube (3) for the purpose of restricting or interrupting the flow of fuel passing from the filling tube (3) into the fuel tank (2).

13. Tank system according to one of Claims 10 to 12, **characterized in that** a sealing diaphragm (32), which surrounds the fuel-pump tube (34), is arranged **in that** region of the filling tube (3) which receives the fuel-pump tube (34) of a fuel-pump nozzle (21), this diaphragm having an aperture (33) which can be changed with the aid of a drive.

14. Tank system according to Claim 13, **characterized in that** the sealing diaphragm (32) is substantially formed by a sleeve (35) which can be deformed elastically at least in the radial direction.

15. Tank system according to Claim 14, **characterized in that** the outer circumference of the sleeve (35) is surrounded by a loop (39) of cable which can be narrowed by motor means.

16. Tank system according to Claim 14, **characterized in that** the sleeve (35a) rests in a substantially positively locking manner in a radial recess (45) in the filling tube (3), the length or axial extent of which recess can be changed by motor means.

17. Tank system according to one of Claims 10 to 16, **characterized by** a first vent line (7) of relatively large cross section of flow, which connects the adsorption filter (6) to the tank (2) and into which a first shut-off valve (12) is connected.

18. Tank system according to Claim 17, **characterized by** a second vent line (10) of smaller cross section of flow, which opens into the first vent line (7) between the adsorption filter (6) and the first shut-off valve (12), a second shut-off valve (13) being arranged in the first vent line (7) downstream of the opening point (11) as seen in the venting direction.

19. Tank system according to Claim 18, **characterized in that** the second shut-off valve (13) is designed as a 3/2-way valve.

20. Tank system according to one of Claims 10 to 19, **characterized by** a pressure sensor (52) which records the tank interior pressure (8).

21. Tank system according to one of Claims 10 to 20, **characterized by** a fuel-pump nozzle sensor (55) which detects a fuel-pump nozzle (21) which has been introduced into the filling tube (3).

22. Tank system according to one of Claims 10 to 21, **characterized in that** all the sensors are connected to the control module (56) via signal lines (S1-S5).

23. Tank system according to Claim 22, **characterized in that** the flow-control valve (18) and the first and second shut-off valve (12, 13) are electromagnetically actuated and are activated by the control module (56) via control lines (C1, C6, C5).

## Revendications

1. Procédé de remplissage d'un réservoir (2) de carburant comportant un conduit (4) de remplissage, dans lequel on détecte par un détecteur (53) de débit le flux de carburant entrant dans le réservoir et on utilise un signal produit par le détecteur (53) pour commander et pour surveiller l'opération de remplissage à l'aide d'un module (56) de commande.

2. Procédé suivant la revendication (1) qui consiste, en présence d'un flux de carburant, à mettre l'espace (8) réservé au gaz du réservoir (2) en communication avec un filtre (6) d'adsorption par l'intermédiaire d'un conduit (7) supplémentaire de purge d'air.

3. Procédé suivant la revendication 1 ou 2, qui consiste à étrangler, lorsque est atteint un premier niveau (59) de remplissage du carburant, l'ouverture de passage de l'extrémité se trouvant du côté du réservoir du conduit (4) de remplissage, s'il y a un flux de carburant dans le conduit de remplissage.

4. Procédé suivant la revendication 2, qui consiste à fermer au moins une fois brièvement, lorsque est atteint un premier niveau (59) de remplissage du carburant, l'ouverture de passage de l'extrémité se trouvant du côté du réservoir du conduit (4) de remplissage, dans la mesure où il y a un flux de carburant dans le conduit de remplissage.

5. Procédé suivant la revendication 3 ou 4, qui consiste à interrompre, lorsque est atteint un deuxième niveau (60) de remplissage, au moins la communication produite par le conduit (7a) supplémentaire de purge d'air entre le réservoir (2) et le filtre (6) d'adsorption et à fermer l'ouverture de passage du conduit (4) de remplissage.

6. Procédé suivant la revendication 5, qui consiste à interrompre une autre communication assurant la purge en fonctionnement entre le réservoir (2) et le filtre (6) d'adsorption et à produire une communication entre le réservoir (2) et l'atmosphère.

7. Procédé suivant l'une des revendications 1 à 6, qui consiste à rendre étanche vis-à-vis de l'atmosphère pendant la phase de remplissage jusqu'à ce que soit atteint le premier niveau (59) de remplissage, un intervalle annulaire présent entre le tuyau (34) de distribution d'une vanne (21) de distribution, le tuyau étant enfilé dans l'extrémité du conduit (4) de remplissage se trouvant du côté du remplissage, et la paroi du conduit (4) de remplissage, mais à l'ouvrir lorsque est atteint le deuxième niveau (60) de remplissage.

8. Procédé suivant la revendication 7, qui consiste à rendre étanche l'intervalle annulaire dès qu'un flux de carburant est présent dans le conduit (4) de remplissage.

9. Procédé suivant la revendication 7, qui consiste à rendre étanche l'intervalle annulaire dès que le tuyau (34) de distribution de la vanne (21) de distribution qui est enfilé dans le conduit de remplissage est détecté par un détecteur (55).

10. Système de réservoir de carburant, notamment pour la mise en oeuvre du procédé suivant l'une des revendications 1 à 9, comprenant
- un réservoir (2) de carburant,
- un tuyau (3) de remplissage débouchant dans le réservoir de carburant et entourant un conduit (4) de remplissage,
- un filtre (6) d'adsorption communiquant avec l'espace (8) réservé au gaz du réservoir (2) et **caractérisé par**
- un détecteur (53) de débit détectant un flux de carburant dans le tuyau (3) de remplissage et communiquant par voie de signal avec un module (56) de commande en vue de commander et de surveiller l'opération de remplissage.

11. Système de réservoir suivant la revendication 10,
**caractérisé en ce que** le détecteur (53) de débit est un détecteur à fonctionnement capacitif.

12. Système de réservoir suivant la revendication 10 ou 11, **caractérisé en ce qu'**il est prévu, dans le réservoir (2), un détecteur (51) de niveau et, dans la région de l'extrémité, se trouvant du côté du réservoir, du tuyau (3) de remplissage, une vanne (18) de commande de débit pouvant être commandée en fonction du niveau et destinée à étrangler ou à interrompre le courant de carburant passant du tuyau (3) de remplissage dans le réservoir (2) de carburant.

13. Système de réservoir suivant l'une des revendications 10 à 12, **caractérisé en ce qu'**il est prévu, dans la zone du conduit. (3) de remplissage recevant le tuyau (34) de distribution d'une. vanne (21) de distribution, un écran (32) d'étanchéité entourant le tuyau (34) de distribution et ayant une ouverture (33) d'écran pouvant être modifiée à l'aide d'un dispositif d'entraînement.

14. Système de réservoir suivant la revendication 13,
**caractérisé en ce que** l'écran (32) d'étanchéité est formé essentiellement d'une douille (35) déformable élastiquement au moins en direction radiale.

15. Système de réservoir suivant la revendication 14,
**caractérisé en ce que** le contour extérieur de la douille (35) est entouré d'une boucle (39) de câble pouvant être rétrécie à l'aide d'un moteur.

16. Système de réservoir suivant la revendication 14,
**caractérisé en ce que** la douille (35a) est reçue sensiblement à complémentarité de formé dans un évidement (45) radial du tuyau (3) de remplissage, évidement dont la longueur ou dont l'étendue axiale peut être modifiée à l'aide d'un moteur.

17. Système de réservoir suivant l'une des revendications 10 à 16, **caractérisé par** un premier conduit (7) de purge d'assez grande section transversale de passage qui met le filtre (6) d'adsorption en communication avec le réservoir (2) et dans lequel est montée une première vanne (12) d'arrêt.

18. Système de réservoir suivant la revendication 17,
**caractérisé par** un deuxième conduit (10) de purge de section transversale de passage plus petite qui débouche dans le premier conduit (7) de purge entre le filtre (6) d'adsorption et la première vanne (12) d'arrêt, une seconde vanne (13) d'arrêt étant montée dans le premier conduit (7) de purge en aval du point (11) d'embouchure dans la direction de purge.

19. Système de réservoir suivant la revendication 18, **caractérisé en ce que** la seconde vanne (13) d'arrêt est constituée en vanne à trois/deux voies.

20. Système de réservoir suivant la revendication 19, **caractérisé par** un détecteur (52) de pression détectant la pression (8) à l'intérieur du réservoir.

21. Système de réservoir suivant l'une des revendications 10 à 20, **caractérisé par** un détecteur (55) de vanne de distribution détectant une vanne (21) de distribution introduite dans le tuyau (3) de remplissage.

22. Système de réservoir suivant l'une des revendications 10 à 21, **caractérisé en ce que** tous les détecteurs sont reliés au module (56) de commande par des lignes (S1 à S5) d'envois de signaux.

23. Système de réservoir suivant la revendication 22, **caractérisé en ce que** la vanne (18) de commande de débit ainsi que la première et la seconde vannes (12,13) d'arrêt sont actionnées par voie électromagnétique et sont commandées par le module (56) de commande par l'intermédiaire de lignes (C1, C6, C5) de commande.
